# EUROPÄISCHE PATENTSCHRIFT

(11) **EP 0 996 692 B1**
(45) Veröffentlichungstag und Bekanntmachung des Hinweises auf die Patenterteilung: **17.09.2003**
(21) Anmeldenummer: 98941347.1
(22) Anmeldetag: 16.07.1998
(51) Int. Cl.: C09D 201/06

(54) **Verfahren zum Aufbringen eines mehrschichtigen Überzugs auf eine Substratoberfläche**
Process for applying a multi-layer coating on a substrate surface
Procédé d'application d'un revêtement multicouche sur la surface d'un substrat

(30) Priorität: 18.07.1997 DE 19730889
(43) Veröffentlichungstag der Anmeldung: 03.05.2000
(73) Patentinhaber: BASF Coatings AG, 48165 Münster (DE)
(72) Erfinder: SAPPER, Ekkehard, D-97222 Rimpar (DE)
(74) Vertreter: Fitzner, Uwe, Dr.
(86) Internationale Anmeldenummer: EP9804443
(87) Internationale Veröffentlichungsnummer: WO99003942

(56) Entgegenhaltungen:
- EP-A- 0 239 850
- GB-A- 2 200 644
- US-A- 3 978 015

## Beschreibung

### Gebiet der Erfindung

Die Erfindung betrifft ein neues Verfahren zum Aufbringen eines mehrschichtigen Überzugs auf einer Substratoberfläche, bei dem ein wässriger Lack, enthaltend eine mehrkomponentige wässrige Dispersion, bestehend aus mindestens einer wässrigen Dispersion eines hydroxylgruppenhaltigen Bindemittels und aus einer mit hydroxylgruppenhaltigen Emulgatoren hergestellten wässrigen Dispersion eines hydrophobierten Aminoplastharzes, verwendet wird.

### Stand der Technik

Wasserklarlacke erlangen im Bereich der Automobilserien- und der Autoreparaturlackierung zunehmende Bedeutung, da mit ihnen die Emission von organischen Solventien beim Lackiervorgang deutlich reduziert werden kann.

Im allgemeinen enthalten die Wasserklarlacke eine wässrige Dispersion oder Lösung eines vemetzbaren Polymeren als Bindemittel und ein oder mehrere Vernetzungsmittel, wie beispielsweise wassermischbare blockierte Isocyanate oder wassermischbare Melaminharze, sowie weitere lackübliche Hilfsstoffe oder Additive, wie beispielsweise Lichtschutzmittel, Verdickungsmittel oder Verlaufsmittel.

In DE-A-43 42 551 werden beispielsweise wässrige Polymerdispersionen und wässrige Lacke, basierend auf diesen Polymerdispersionen, beschrieben, enthaltend hydroxylgruppenhaltige Polyacrylate als Bindemittelkomponente, die sich besonders gut zur Herstellung transparenter Lackschichten, insbesondere Decklackschichten, eignen, welche hohe Säure- und Kratzbeständigkeiten aufweisen.

Von DE-A-43 22 242 umfaßt werden wässrige Zweikomponenten-Beschichtungsmittel, enthaltend wässrige Dispersionen von Polyacrylaten als Bindemittel und Polyisocyanate als Vemetzungsmittel, die ebenfalls insbesondere als Decklacke bevorzugt bei der Auotreparaturlackierung eingesetzt werden und die, neben den Anforderungen an einen Autoreparaturlack, einen guten Verlauf, gute mechanische Eigenschaften und eine hohe Witterungsbeständigkeit aufweisen.

DE-A-43 32 015 beschreibt schließlich wässrige Lacke, enthaltend Gemische aus wässrigen Dispersionen von Polyurethanacrylatharzen und wässrigen Dispersionen von Polyacrylat-, Polyurethan- und/oder Polyesterharzen sowie gegebenenfalls Vemetzungsmittel, wie Aminoplastharze und blockierte Polyisocyanate. Solche Lacke sind zur Herstellung von Decklackschichten geeignet, die sich trotz niedriger Einbrenntemperaturen durch gute Eigenschaften der resultierenden Lackschicht auszeichnen.

DE-A-38 03 522 beschreibt eine wässrige Beschichtungszusammensetzung aus einem wasserdispergierbaren Acrylpolymer und einem Melaminharz, die indes obligatorisch Pigmente enthält. Das hydrophobe Melaminharz wird in Gegenwart eines wasserlöslichen Harzes in Wasser dispergiert. Die Beschichtungszusammensetzung kann nicht als Klarlack verwendet werden.

Die Wasserklarlackformulierungen des Standes der Technik haben allerdings das Problem der ungenügenden Kochersicherheit und der ungenügenden Abdunstgeschwindigkeit des Lackfilms, weshalb der Einsatz solcher Wasserklarlackformulierungen in der Serienlackierung besondere Maßnahmen zum schonenden Abdunsten erfordert, die ihrerseits die Taktfrequenz der Serienfertigung erniedrigen und desweiteren hohe Investitionen erfordern.

Weiterhin fehlt es bei zweikomponentigen Wasserklarlacken, bestehend aus einer Bindemittel- und einer Vemetzerkomponente oftmals an der nötigen Verarbeitungstabilität, was sich beispielsweise in einem unerwünschten Viskostätsanstieg im Lack nach dem Mischen der Bindemittel- und der Vemetzerkomponente durch Reaktion der beiden Komponenten ausdrückt.

Die Wasserklarlacke oder wässrigen transparenten Decklacke können daher nicht in einem Verfahren zum Aufbringen eines mehrschichtigen Überzugs auf einer Substratoberfläche, umfassend folgende Schritte:
(1): Aufbringen eines wässrigen Basislacks A auf die Substratoberfläche,
(2): Ausbildung eines Polymerfilms aus dem in Stufe (1) aufgebrachten wässrigen Basislack A,
(3): Aufbringen eines wässrigen transparenten Decklacks DL auf die gemäß Stufe (2) erhaltene Basislackschicht und abschließend
(4): Gemeinsames Einbrennen der Basislackschicht und der Decklackschicht,
eingesetzt werden.

Aus dem amerikanischen Patent US 3,978,015 A ist ein wässriger Elektrotauchlack bekannt, der ein nicht wasserdispergierbares, harzartiges, thermoplastisches Polyol in einer wässrigen Phase mit Hilfe eines harzartigen, hydroxyl- und carboxylgruppenhaltigen Emulgators emulgiert enthält und darüber hinaus ein hydrophobes Aminoplastharz enthält. Die Verwendung dieses Elektrotauchlacks als transparenter Decklack in dem vorstehend genannte Verfahren zur Herstellung eines mehrschichtigen Überzugs auf einer Substratoberfläche wird nicht offenbart.

Aus der britischen Patentanmeldung GB A-2200644 ist eine wässrige Basislackzusammensetzung bekannt, die ein wasserdispergierbares, filmbildendes Polyacrylat, ein in der Gegenwart eines wasserlöslichen Polymers in Wasser dispergierten, hydrophoben Melaminharzes und ein Pigment enthält. Der Basislack kann nicht als transparenter Decklack in dem Verfahren zum Aufbringen eines mehrschichtigen Überzugs auf einer Substratoberfläche eingesetzt werden.

### Aufgabe und Lösung

Aus den oben angeführten Problemstellungen resultierte die Aufgabe, ein neues Verfahren zum Aufbringen eines mehrschichtigen Überzugs auf einer Substratoberfläche bereitzustellen, bei dem verarbeitungsstabile wässrige transparente Decklacke verwendet werden, die zu Lackschichten mit ausgezeichneten Eigenschaften führen, wie insbesondere Säure- und Kratzbeständigkeit sowie Witterungsstabilität, in Verbindung mit einer schnellen Abdunstgeschwindigkeit und einer hohen Kochersicherheit bei der Lacktrocknung führen.

Diese kann überraschenderweise mit dem erfindungsgemäßen Verfahren zum Aufbringen eines mehrschichtigen Überzugs auf einer Substratoberfläche, umfassend folgende Schritte:
(1): Aufbringen eines wässrigen Basislacks A auf die Substratoberfläche,
(2): Ausbildung eines Polymerfilms aus dem in Stufe (1) aufgebrachten wässrigen Basislack A,
(3): Aufbringen eines wässrigen transparenten Decklacks DL auf die gemäß Stufe (2) erhaltene Basislackschicht und abschließend
(4): Gemeinsames Einbrennen der Basislackschicht und der Decklackschicht,
gelöst werden, wobei der Decklack DL ein wässriger Lack ist, enthaltend eine mehrkomponentige wässrige Dispersion, enthaltend:
A) mindestens ein hydroxylgruppenhaltiges Bindemittel in wässriger Dispersion und
B) eine mit einem hydroxylgruppenhaltigen Emulgator hergestellte stabile wässrige Dispersion eines hydrophoben Aminoplastharzes.

Die mehrkomponentige wässrige Dispersion als Bestandteil wässriger transparenter Decklacke enthält
A) mindestens eine wässrige Dispersion eines hydroxylgruppenhaltigen Bindemittels und
B) eine mit hydroxylgruppenhaltigen Emulgatoren hergestellte stabile wässrige Dispersion eines hydrophoben Aminoplastharzes.

In einer bevorzugten Ausführungsform der Erfindung ist der zur Herstellung der stabilen wässrigen Dispersion des hydrophoben Aminoplastharzes verwendete Emulgator ein Di- und/oder Polyol mit einem Molekulargewicht von mindestens 500 Dalton, besonders bevorzugt ausgewählt aus der Gruppe der Polyacrylatdi- und/oder-polyole, Polyesterdi- und/oder -polyole und Polyetherdi- und/oder-polyole, sowie ganz besonders bevorzugt Polyurethandi- und/oder-polyole, Polycarbonatdi- [und/oder] -polyole [und] Polyetherdi- und/oder-polyole..

Im Falle der Polyetherdi- und/oder -polyole können diese auch an das Aminoplastharz gebunden sein. Vorzugsweise werden hierfür Blockcopolyetherreste aus Ethylenoxid- und Propylenoxideinheiten verwendet.

Weiterhin bevorzugt ist als hydrophobes Aminoplastharz ein hydrophobes Melaminharz, besonders bevorzugt erhalten durch Veretherung eines Melamin-Formaldehyd-Kondensationsprodukts mit C3- bis C12-Alkoholen.

Neben der Vernetzerkomponente B) enthalten die mehrkomponentigen wässrigen Dispersionen bevorzugt mindestens ein weiteres Vernetzungsmittel in wässriger Dispersion, besonders bevorzugt ein Trisalkoxycabonylaminotriazin in wässriger Dispersion.

Vorzugsweise ist das in der Komponente A) in wässriger Dispersion anwesende hydroxylgruppenhaltige Bindemittel ein Polymerisat, ausgewählt aus der Gruppe der hydroxylgruppenhaltigen Polyester, Polyether, Alkydharze und Cellulosederivate, sowie besonders bevorzugt Polyurethane, Polyacrylate und Polyurethanacrylate.

Weiterhin von der Erfindung umfaßt sind die mit dem Verfahren zum Aufbringen eines mehrschichtigen Überzugs auf einer Substratoberfläche, beschichteten Substrate.

### Durchführung der Erfindung

### Die Komponenten A) und B) der mehrkomponentigen wässrigen Dispersion

Die Komponente A) besteht aus mindestens einer wässrigen Dispersion eines hydroxylgruppenhaltige Bindemittels, bevorzugt eines Polyesters, Polyethers, Alkydharzes und/oder Cellulosederivates, besonders bevorzugt eines hydroxylgruppenhaltigen Polyacrylats, Polyurethans und/oder Polyurethanacrylats.
Die besonders bevorzugten Polyacrylate, Polyurethane und Polyurethanacrylate können beispielsweise gemäß den schon zitierten Offenlegungsschriften DE-A-43 22 242, DE-A-43 32 015 und DE-A-43 42 551 hergestellt werden.

Erfindungsgemäß enthält die wässrige mehrkomponentige Dispersion als Komponente B) eine stabile wässrige Dispersions eines hydrophoben Aminoplastharzes, die mittels hydroxylgruppenhaltiger Emulgatoren hergestellt wird.

Bei den an sich bekannten hydrophoben Aminoplastharzen handelt es sich bevorzugt um Kondensationsprodukte aus Aldehyden, insbesondere Formaldehyd, und beispielsweise Harnstoff, Guanamin, Benzoguanamin, sowie vorzugsweise Melamin.
Die hydrophoben Aminoplastharze enthalten Alkoholgruppen, vorzugsweise Methylolgruppen, welche bevorzugt mit C3- bis C12-Alkoholen, wie beispielweise Isopropanol, n-Butanol, Isobutanol, tert.-Butanol, Amylalkohol, 1-Hexanol, 1-Octanol, 2-Ethylhexanol, 1-Decanol, Isodecanol, 1-Dodecanol oder Isododecanol, verethert sind.
Als hydrophobe Aminoplastharze werden insbesondere mit Butanol veretherte Melamin-Formaldehydharze eingesetzt.

Als hydroxylgruppenhaltige Emulgatoren für die hydrophoben Aminoplastharze werden vorzugsweise Di- und /oder Polyole mit emulgierenden Eigenschaften eingesetzt, besonders bevorzugt Diund/oder Polyole mit einem Molekulargewicht zwischen 500 und 50.000 Dalton, ganz besonders bevorzugt mit einem Molekulargewicht zwischen 500 und 10.000 Dalton und insbesondere 500 bis 5000 Dalton.
Vorzugsweise werden die emulgierenden Di- und/oder Polyole aus der Gruppe der Polyacrylatdi- und/oder -polyole, Polyesterdi- und/oder-polyole und Polyetherdi- und/oder -polyole, sowie ganz besonders bevorzugt aus der Gruppe der Polyurethandi- und/oder -polyole, Polycarbonatdi- und/oder -polyole und der Polyetherdi- und/oder -polyole ausgewählt.
Das Verhältnis von hydrophilen zu hydrophoben Anteilen in den Diund/oder Polyolen wird vorzugsweise entweder über das Molekulargewicht der Di- und/oder Polyole und den Anteil schon vorhandener hydrophiler Gruppen im Di- und/oder Polyol oder durch die Einführung zusätzlicher hydrophiler Gruppen, wie beispielsweise Säuregruppen oder deren Salze, z.B. Carboxyl- oder Carboxylatgruppen, Sulfonsäure- oder Sulfonatgruppen sowie Phosphonsäure- oder Phosphonatgruppen, eingestellt.

Besonders bevorzugte Polyetherdi- und/oder -polyole sind Blockcopolyether aus Ethylenoxid- und Propylenoxideinheiten, wobei der Gehalt an Ethylenoxideinheiten bei 30 bis 50% und der Gehalt an Propylenoxideinheiten bei 50 bis 70 Gew.-% liegt. Vorzugsweise beträgt das Molekulargewicht etwa 9000 Dalton. Emulgatoren dieser Art werden beispielsweise von der Fa. BASF AG unter dem Handelsnamen Pluronic® PE 9400 vertrieben.

Die Polyetherdi- und/oder -polyole , insbesondere die der vorstehend beschriebenen Art, können auch an die hydrophoben Aminoplastharze gebunden sein. Vorzugsweise enthält das hydrophobe Aminoplastharz die Polyetherdiol- und/oder -polyolreste in einer Menge von 1 bis 4, insbesondere 1,8 bis 2,5 Gew.-%, bezogen auf das Aminoplastharz und Emulgatorreste. Produkte dieser Art werden von der Fa. BASF AG unter dem Handelsnamen Luwipal® LR 8984 vertrieben.

Als weitere Vemetzungsmittel neben den hydrophoben Aminoplastharzen können in der mehrkomponentigen wässrigen Dispersion alle für die Vernetzung von hydroxylgruppenhaltigen Bindemitteln geeigneten Vernetzungsmittel, bevorzugt in wässriger Dispersion, enthalten sein, sofern sie den Dispersionscharakter der mehrkomponentigen wässrigen Dispersion nicht beeinträchtigen.

Bevorzugt als weiteres Vemetzungsmittel sind Trisalkoxycarbonylaminotriazine, wie sie beispielsweise in US-PS 4,939,213 oder EP-A-0 565 774 beschrieben werden, vorzugsweise in wässriger Dispersion. Ganz besonders bevorzugt sind dabei Trisalkoxycarbonylaminotriazine, die als Alkoxygruppen niedrige Alkoxygruppen, vorzugsweise Methoxy- und/oder Butoxygruppen, enthalten.

Als weitere Vernetzungsmittel geeignet sind blockierte und/oder unblockierte Polyisocyanate, deren Isocyanatgruppen vorzugsweise an aliphatische oder cycloaliphatische Reste gebunden sind. Beispiele für derartige Polyisocyanate sind Hexamethylendiisocyanat, Isophorondiisocyanat, Trimethylhexamethylendiisocyanat, Dicyclohexylmethandiisocyanat, 1,3-Bis-(2-lsocyanatopropyl-2-)benzol, sowie Addukte dieser Polyisocyanate an Polyole, insbesondere niedermolekulare Polyole, wie beispielsweise Trimethylolpropan, sowie von diesen Polyisocyanaten abgeleitete isocyanuratgruppen- und/oder biuretgruppenhaltige Polyisocyanate, die vorzugsweise mehr als zwei Isocyanatgruppen im Molekül enthalten.
Zur Blockierung der Polyisocyanate können an sich alle dem Fachmann bekannten Blockierungsmittel mit einer ausreichend tiefen Deblockierungstemperatur eingesetzt werden.

### Wässrige Lacke, enthaltend die mehrkomponentigen wässrigen Dispersionen sowie die Applikation der wässrigen Lacke

Wässrige Lacke, enthaltend die wässrigen Lackdispersionen, können neben den oben beschriebenen hydroxylgruppenhaltigen Bindemitteln, bevorzugt in Anteilen von bis zu 75 Gew.-%, bezogen auf das Bindemittel, weitere Bindemittelbestandteile mit geringen Hydroxylgruppengehalten oder frei von Hydroxylgruppen in wässriger Dispersion enthalten, wie beispielsweise wasserdispergierbare Polyesterharze, wasserdispergierbare Polyacrylatharze, wasserdispergierbare Polyurethanharze, wasserdispergierbare Alkydharze, wasserdispergierbare Cellulosederivate sowie wasserdispergierbare Polyetherharze.

Außerdem können die wässrigen Lacke vemetzte polymere Mikroteilchen (vergleiche beispielsweise EP-A-0 038 127) und/oder übliche rheologiesteuemde anorganische oder organische Additive enthalten. Als Verdicker wirken beispielsweise Schichtsilikate, wasserlösliche Celluloseether sowie synthetische Polymere mit ionischen oder assoziativ wirken Gruppen, wie Polyvinylalkohol, Polyamide, Poly(meth)acrylamid, Poly(meth)acrylsäure, Polyvinylpyrrolidon oder hydrophob modifizierte ethoxylierte Urethane oder Polyacrylate.

Die wässrigen Lacke enthalten gegebenenfalls noch weitere Hilfsmittel und/oder Additive, wie beispielweise Katalysatoren für die Vernetzungsreaktion, Entschäumungsmittel, Dispersionshilfsmittel, Netzmittel, vorzugsweise carboxyfunktionelle Dispergiermittel, die sich von den oben genannten Emulgatoren unterscheiden, Antioxidantien, UV-Absorber, Radikalfänger, Verlaufshilfsmittel und/oder Biozide.

Weiterhin können die wässrigen Lacke organische Lösemittel in Mengen von bis zu 15 Gew.-% enthalten. Als organische Lösemittel sind beispielsweise Naphthaline, Benzine oder Alkohole, vorzugsweise niedermolekulare Diole, wie z.B. Alkylenglykole oder Dimethylolcyclohexan, geeignet.

Als weitere Komponente können die wässrigen Lacke Filmbildehilfsmittel enthalten, wie beispielsweise Dicarbonsäuredialkylester oder hochsiedende Benzine oder Naphthaline, die einen Siedepunkt von über 100 Grad C, vorzugsweise über 140 Grad C, aufweisen.

Die wässrigen Lacke können sowohl bei der Serien- als auch bei der Reparaturlackierung von Automobilkarosserien als Klarlacke eingesetzt werden.

Das erfindungsgemäße Verfahren zum Aufbringen mehrschichtiger Überzüge unter Verwendung wässriger Lacke, enthaltend die mehrkomponentigen wässrigen Dispersionen, als Decklacke DL, das gliedert sich in folgende Stufen:
(1): Aufbringen eines wässrigen Basislacks BL auf die Substratoberfläche,
(2): Ausbildung eines Polymerfilms aus dem in Stufe (1) aufgebrachten wässrigen Basislack BL,
(3): Aufbringen eines wässrigen transparenten Decklacks DL, enthaltend die erfindungsgemäße mehrkomponentige wässrige Dispersion, auf die gemäß Stufe (2) erhaltene Basislackschicht und abschließend
(4): Gemeinsames Einbrennen der Basislackschicht und der Decklackschicht.

Die in Stufe (1) aufgebrachte Basislackschicht wird zur Ausbildung des Polymerfilms gemäß Stufe (2) vor dem Auftrag des erfindungsgemäßen Decklacks DL in Stufe (3) vorzugsweise bei erhöhter Temperatur abdunsten lassen, wobei der Zeitraum des Abdunstens von der Temperatur abhängt und über weite Bereiche einstellbar ist. So werden beispielsweise bei Temperaturen von 60 bis 100 Grad C, vorzugsweise 70 bis 85 Grad C, Abdunstzeiten zwischen 1 bis 15 Minuten, vorzugsweise 4 bis 10 Minuten, gewählt.
Der Basislack BL und der Decklack DL werden nach üblichen im Stand der Technik bekannten Verfahren aufgetragen. Die Trockenfilmdicke der Basislackschicht liegt zwischen 10 und 40 µm, vorzugsweise zwischen 12 und 25 µm, die Trockenfilmdicke der Decklackschicht zwischen 20 und 60 µm, vorzugsweise zwischen 35 und 45µm. Nach Aufbringen des Decklacks DL in Stufe (3) und vor dem Einbrennschritt in Stufe (4) werden die Basislackschicht und die Decklackschicht vorzugsweise bei Raumtemperatur während eines Zeitraums von 2 bis 10 Minuten, vorzugsweise von 4 bis 6 Minuten, getrocknet.
Das Einbrennen der Basislack- und der Decklackschicht in einer Stufe erfolgt in geeigneten und aus dem Stand der Technik bekannten Vorrichtungen, bevorzugt bei Temperaturen zwischen 120 und 160 Grad C, besonders bevorzugt zwischen 130 und 150 Grad C, während eines Zeitraums von bevorzugt 10 bis 30 Minuten, besonders bevorzugt von 15 bis 25 Minuten.

Ein weiterer Gegenstand der vorliegenden Erfindung ist ein mehrschichtig beschichtetes Substrat, wobei der Überzug auf die Substratoberfläche aufgebracht wird, indem
(1): ein wässriger Basislacks BL auf die Substratoberfläche aufgebracht wird,
(2): zur Ausbildung eines Polymerfilms aus dem in Stufe (1) aufgebrachten Basislack A dieser abdunsten lassen wird,
(3): hiemach ein wässriger transparenter Decklack DL auf die gemäß Stufe (2) erhaltene Basislackschicht aufgebracht wird und abschließend
(4): die Basislackschicht und die Decklackschicht gemeinsam eingebrannt werden,
   dadurch gekennzeichnet, dass der Decklack DL die mehrkomponentige wässrige Dispersion enthält.

Als zu beschichtende Substrate kommen vor allem vorbehandelte Metallsubstrate in Frage; es können aber auch nicht vorbehandelte Metalle oder beliebige andere Substrate, wie beispielsweise Holz oder Kunststoffe, unter Verwendung des erfindungsgemäßen Verfahrens mit einer mehrschichtigen schützenden und/oder dekorativen Beschichtung überzogen werden.

Die Erfindung wird anhand der folgenden Beispiele erläutert. Alle Angaben über Teile und Prozentsätze sind Gewichtsangaben, falls nicht ausdrücklich anders bezeichnet.

### Beispiele:

### Beispiel 1: Herstellung einer wässrigen Dispersion A1) eines hydroxylgruppenhaltigen Bindemittels

In einen Stahlkessel, ausgestattet mit Monomerenzulauf, Initiatorzulauf, Thermometer, Ölheizung und Rückflußkühler, werden 8,08 Teile Methoxypropanol und 8,88 Teile Butyldiglykol vorgelegt und auf 120 Grad C aufgeheizt.
Dann wird eine Lösung von 7,95 Teilen t-Butylperethylhexanoat in 11,09 Teilen Methoxypropanol in einer solchen Geschwindigkeit zugegeben, dass die Zugabe nach 4,5 Stunden abgeschlossen ist.
Mit Beginn der Zugabe der t-Butylperethylhexanoat-Lösung wird auch mit der Zugabe einer Mischung aus:
0,96 Teilen Glycidylmethacrylat
19,64 Teilen Butylacrylat
5,47 Teilen Butylmethacrylat
9,95 Teilen Cyclohexylmethacrylat
4,90 Teilen Styrol
21,32 Teilen Hydroxypropylmethacrylat
1,76 Teilen Acrylsäure
begonnen, wobei die Monomerenmischung in einer solchen Geschwindigkeit zugegeben wird, dass die Zugabe nach 4 Stunden abgeschlossen ist. Nach Abschluß der Zugabe der t-Butylperethylhexanoat-Lösung wird die Reaktionsmischung noch 2 Stunden bei 120 Grad C gehalten. Dann wird die Harzlösung auf 80 Grad C abgekühlt und innerhalb von 30 Minuten mit Dimethylethanolamin bis zu einem Neutralisationsgrad von 80% neutralisiert. Anschließend wird soviel Wasser zugegeben, bis der Feststoffgehalt der Dispersion etwa 40% beträgt.
Aus dieser Dispersion wird das organische Lösemittel durch azeotrope Destillation unter Vakumm solange abgetrennt, bis höchstens 3% gaschromatographisch nachweisbar sind.
Nach Beendigung der Destillation wird die Dispersion durch die Zuagbe von deionisiertem Wasser auf einen Feststoffgehalt von 38% eingestellt.

### Beispiel 2: Herstellung der wässrigen Klarlacke KL1, KL2 und KL3

### Beispiel 2.1: Herstellung des Klarlacks KL1

60,40 Teile der wässrigen Dispersion A1) gemäß Beispiel 1 werden mit 28,00 Teilen der wässrigen Dispersion des hydrophoben Melaminharzes B1)[ 361,5 Teile Luwipal® 8792 der Fa. BASF AG, 10,2 Teile Pluronic® PE 9400 der Fa. BASF AG (Blockcopolyether aus 40% Ethylenoxideinheiten und 60% Propylenoxideinheiten eines Molekulargewichts von etwa 9000 Dalton als Emulgator)] und 128,3 Teile einer Pufferlösung, bestehend aus 1,47 Teilen Triethanolamin, 0,45 Teilen 100%iger Ameisensäure und 126,4 Teilen deionisiertem Wasser, 2,00 Gew.-Teilen Butyldiglykol, 0,15 Gew.-Teilen eines Verlaufshilfsmitteis (Tego Flow® 425 der Fa. Goldschmidt AG), 0,03 Gew.-Teilen eines oberflächenaktiven Mittels auf Silikonbasis (BYK® 331 der Fa. Byk Gulden) sowie 9,42 Gew.-Teilen entionisiertem Wasser intensiv vermischt. Es resultiert der Klarlack KL1.

### Beispiel 2.2: Herstellung des Klarlacks KL2

60,40 Gew.-Teile der wässrigen Dispersion A1) gemäß Beispiel 1 werden mit 28,00 Gew.-Teilen eines Gemischs B2) aus 15,00 Gew.-Teilen einer wässrigen Dispersion eines hydrophoben Melaminharzes B1) gemäß Beispiel 2.1 und 13,00 Gew.-Teilen einer wässrigen 50 %igen Dispersion von Trisalkoxycarbonylaminotriazin B2) (Alkoxygruppen: Butoxygruppen und Methoxygruppen im mittleren Verhältnis 2:1), 2,00 Gew.-Teilen Butyldiglykol, 0,15 Gew.-Teilen eines Verlaufshilfsmittels (Tego Flow® 425 der Fa. Goldschmidt AG), 0,03 Gew.-Teilen eines oberflächenaktiven Mittels auf Silikonbasis (BYK® 331 der Fa. Byk Gulden) sowie 9,42 Gew.-Teilen entionisiertem Wasser intensiv vermischt. Es resultiert der Klarlack KL2.

### Beispiel 2.3: Herstellung des Klarlacks KL3

Beispiel 2.1 wird wiederholt, nur das anstelle von Luwipal® 8792 und Pluronic® PE 9400 (beides von Fa. BASF AG) 28,0 Teile Luwipal® LR 8984 der Fa. BASF AG verwendet wird. Bei Luwipal® LR 8984 handelt es sich um ein butanolverethertes Melaminharz (Luwipal® 018 der Fa. BASF AG), welches 2,2 Gew.-% Pluronic® PE 9400 chemisch gebunden enthält. Der resultierende Klarlack KL3 erweist sich als ultrafiltrierbar.

### Beispiel 3: Herstellung eines Klarlacks KV1 ohne die Komponente B) (Vergleich)

60,40 Gew.-Teile der wässrigen Dispersion A1) gemäß Beispiel 1 werden mit einem Gemisch aus 5,20 Gew.-Teilen Melaminharz (Cymel® 202 der Fa. American Cyanamid), 2,90 Gew.-Teilen einer Lösung von blockiertem Hexamethylendiisocyanat (enthaltend 1,079 Teile Basonat® HI 100 und 0,305 Teile Diethylmalonat) und 12,90 Gew.-Teilen einer Lösung von blockiertem Isophorondiisocyanat (enthaltend 3,296 Teile Vestanat T1890 und 0,712 Teile Diethylmalonat) als Vemetzerkomponenten, 4,50 Gew.-Teilen Butyldiglykol, 0,15 Gew.-Teilen eines Verlaufshilfsmittels (Tego Flow® 425 der Fa. Goldschmidt AG), 0,03 Gew.-Teilen eines oberflächenaktiven Mittels auf Silikonbasis (BYK® 331 der Fa. Byk Gulden)sowie 14,52 Gew.-Teilen entionisiertem Wasser intensiv vermischt. Es resultiert der Klarlack KV1. Er erweist sich als nicht ultrafiltrierbar.

### Beispiel 4: Applikation der Klarlacke KL1, KL2 und KL3 bzw. des Vergleichs-Klarlacks KV1 als Decklacke und Prüfung der eingebrannten Lackfilme

Auf ein mit einer handelsüblichen Elektrotauchlackierung und einem handelsüblichen Füller beschichtetes phosphatiertes Stahlblech wird ein wässriger mit Aluminiumplättchen pigmentierter Basislack BL gemäß EP-A-0 279 813 so appliziert, dass eine Trockenfilmschichtdicke von 12 bis 15 Mikrometer erhalten wird. Der applizierte Basislack BL wird 10 Minuten bei Raumtemperatur und 10 Minuten bei 60 Grad C getrocknet.
Danach wird der gemäß den Beispielen 2 oder 3 (Vergleichsbeispiel) hergestellte Klarlack KL1, KL2 und KL3 bzw. KV1 als Decklack DL in zwei Kreuzgängen mit 15 Minuten Zwischenablüftzeit auf die Basislackschicht gespritzt. Schließlich wird 30 Minuten bei Raumtemperatur getrocknet, 10 Minuten bei 80 Grad C vorgetrocknet und abschließend 30 Minuten bei 145 Grad C im Umluftofen eingebrannt.
Die solchermaßen erhaltenen Klarlackschichten aus den Klarlacken KL1, KL2 und KL3 weisen bei 40µm Schichtdicken keine Kocher oder Nadelstiche auf, wobei die Kochergrenze bei etwa 55µm liegt.

Eine Schicht mit dem Klarlack KV1 gemäß Vergleichsbeispiel weist bei 40 µm Schichtdicke leichte Kocher und Nadelstiche auf.

## Patentansprüche

1. Verfahren zum Aufbringen eines mehrschichtigen Überzugs auf einer Substratoberfläche, umfassend folgende Schritte:
(1): Aufbringen eines wässrigen Basislacks A auf die Substratoberfläche,
(2): Ausbildung eines Polymerfilms aus dem in Stufe (1) aufgebrachten wässrigen Basislack A,
(3): Aufbringen eines wässrigen transparenten Decklacks DL auf die gemäß Stufe (2) erhaltene Basislackschicht und abschließend
(4): Gemeinsames Einbrennen der Basislackschicht und der Decklackschicht,
**dadurch gekennzeichnet, dass** der Decklack DL ein wässriger Lack ist, enthaltend eine mehrkomponentige wässrige Dispersion, enthaltend:
A) mindestens ein hydroxylgruppenhaltiges Bindemittel in wässriger Dispersion und
B) eine mit einem hydroxylgruppenhaltigen Emulgator hergestellte stabile wässrige Dispersion eines hydrophoben Aminoplastharzes.

2. Verfahren nach Anspruch 1,
**dadurch gekennzeichnet, dass** der hydroxylgruppenhaltige Emulgator ein Di- und/oder Polyol ist.

3. Verfahren nach Anspruch 2,
**dadurch gekennzeichnet, dass** der hydroxylgruppenhaltige Emulgator ein Di- und/oder Polyol mit einem Molekulargewicht von mindestens 500 Dalton ist.

4. Verfahren nach Anspruch 2 oder 3,
**dadurch gekennzeichnet dass** das Di- und/oder Polyol ausgewählt ist aus der Gruppe der Polyurethandl- und/oder -polyole, Polycarbonatdi- und/oder -polyole, Polyacrylatdi- und/oder -polyole, Polyesterdi- und/oder -polyole, sowie Polyetherdi- und/oder -polyole.

5. Verfahren nach Anspruch 4,
**dadurch gekennzeichnet, dass** das eingesetzte Di- und/oder Polyol ein Polyurethandi- und/oder -polyol, ein Polycarbonatdi- und/oder-polyol und ein Polyetherdi- und/oder -polyol ist.

6. Verfahren nach einem der Ansprüche 1 bis 5,
**dadurch gekennzeichnet, dass** das hydrophobe Aminoplastharz ein hydrophobes Melaminharz ist.

7. Verfahren nach Anspruch 6
**dadurch gekennzeichnet, dass** das hydrophobe Melaminharz, durch Veretherung eines Melamin-Formaldehyd-Kondensationsprodukts mit C3- bis C12-Alkoholen hergestellt ist.

8. Verfahren nach einem der Ansprüche 1 bis 7,
**dadurch gekennzeichnet, dass** die mehrkomponentige wässrige Dispersion mindestens eine weitere Vemetzungskomponente in wässriger Dispersion enthält.

9. Verfahren nach Anspruch 8,
**dadurch gekennzeichnet, dass** die weitere Vemetzungskomponente ein Trisalkoxycarbonylaminotriazin in wässriger Dispersion ist.

10. Verfahren nach einem der Ansprüche 1 bis 9,
**dadurch gekennzeichnet, dass** das hydroxylgruppenhaltige Bindemittel in Komponente A) ausgewählt ist aus der Gruppe der hydroxylgruppenhaltigen Polyacrylate, Polyurethane, Polyester, Polyether, Alkydharze und/oder Cellulosederivate.

11. Verfahren nach Anspruch 10,
**dadurch gekennzeichnet, dass** das hydroxylgruppenhaltige Bindemittel in Komponente A) eine hydroxylgruppenhaltiges Polyacrylat ist.

12. Substrat, beschichtet mit einem mehrschichtigen Überzug, wobei der Überzug auf die Substratoberfläche aufgebracht wird, indem
(1): ein wässrigen Basislacks A auf die Substratoberfläche aufgebracht wird,
(2): zur Ausbildung eines Polymerfilms aus dem in Stufe (1) aufgebrachten Basislack A kurz abdunsten lassen wird,
(3): hiemach ein wässriger transparenter Decklack DL auf die gemäß Stufe (2) erhaltene Basislackschicht aufgebracht wird und abschließend
(4): die Basislackschicht und die Decklackschicht gemeinsam eingebrannt werden,
**dadurch gekennzeichnet, dass** der Decklack DL ein wässriger Lack gemäß einem der Ansprüche 1 bis 11 ist.

## Claims

1. A method of applying a multilayer coating to a substrate surface, comprising the following steps:
(1): applying an aqueous basecoat A to the substrate surface,
(2): forming a polymer film from the aqueous basecoat A applied in stage (1),
(3): applying an aqueous transparent topcoat DL to the basecoat film obtained in accordance with stage (2), and finally
(4): baking the basecoat film and the topcoat film together,
wherein said topcoat DL is an aqueous coating material comprising a multicomponent aqueous dispersion comprising:
A) at least one aqueous dispersion of a hydroxyl-containing binder, and
B) a stable aqueous dispersion of a hydrophobic amino resin, said dispersion being prepared using a hydroxyl-containing emulsifier.

2. The method as claimed in claim 1, wherein said hydroxyl-containing emulsifier is a diol and/or polyol.

3. The method as claimed in claim 2, wherein said hydroxyl-containing emulsifier is a diol and/or polyol having a molecular weight of at least 500 daltons.

4. The method as claimed in claim 2 or 3, wherein said diol and/or polyol is selected from the group of the polyurethane-diols and/or -polyols, polycarbonate-diols and/or -polyols, polyacrylate-diols and/or -polyols, polyester-diols and/or -polyols, and polyether-diols and/or -polyols.

5. The method as claimed in claim 4, wherein the diol and/or polyol used is a polyurethane-diol and/or -polyol, a polycarbonate-diol and/or -polyol and/or a polyether-diol and/or -polyol.

6. The method as claimed in any of claims 1 to 5, wherein said hydrophobic amino resin is a hydrophobic melamine resin.

7. The method as claimed in claim 6, wherein said hydrophobic melamine resin has been prepared by etherifying a melamine-formaldehyde condensation product with C3 to C12 alcohols.

8. The method as claimed in any of claims 1 to 7, wherein said multi-component aqueous dispersion comprises at least one further crosslinking component in aqueous dispersion.

9. The method as claimed in claim 8, wherein said further crosslinking component is a trisalkoxycarbonylaminotriazine in aqueous dispersion.

10. The method as claimed in any of claims 1 to 9, wherein said hydroxyl-containing binder in component A) is selected from the group consisting of hydroxyl-containing polyacrylates, polyurethanes, polyesters, polyethers, alkyd resins, and cellulose derivatives.

11. The method as claimed in claim 10, wherein said hydroxyl-containing binder in component A) is a hydroxyl-containing polyacrylate.

12. A substrate coated with a multilayer coating, said coating being applied to said substrate surface by
(1): applying an aqueous basecoat A to the substrate surface,
(2): allowing the basecoat A to evaporate in order to form a polymer film from the basecoat A applied in stage (1),
(3): thereafter, applying an aqueous transparent topcoat DL to the basecoat film obtained in accordance with stage (2), and finally
(4): baking the basecoat film and the topcoat film together,
wherein said topcoat DL is an aqueous coating material according to any of claims 1 to 11.

## Revendications

1. Procédé d'application d'un revêtement multicouche sur une surface de substrat, comprenant les étapes suivantes:
(1): application d'une laque de base aqueuse A sur la surface du substrat,
(2): formation d'un film de polymère à partir de la laque de base aqueuse A appliquée à l'étape (1),
(3): application d'une laque de finition transparente aqueuse LF sur la couche de laque de base obtenue selon l'étape (2) et enfin
(4) cuisson groupée de la couche de laque de base et de la couche de laque de finition,
**caractérisé en ce que** la laque de finition LF est une laque aqueuse, contenant une dispersion aqueuse multicomposant, contenant:
A) au moins un liant contenant des groupes hydroxyle en dispersion aqueuse et
B) une dispersion aqueuse stable, préparée au moyen d'un émulsifiant contenant des groupes hydroxyle, d'une résine aminoplaste hydrophobe.

2. Procédé selon la revendication 1, **caractérisé en ce que** l'émulsifiant contenant des groupes hydroxyle est un di- et/ou un polyol.

3. Procédé selon la revendication 2, **caractérisé en ce que** l'émulsifiant contenant des groupes hydroxyle est un di- et/ou un polyol d'un poids moléculaire d'au moins 500 Dalton.

4. Procédé selon la revendication 2 ou 3, **caractérisé en ce que** le di- et/ou le polyol est choisi dans le groupe des di- et/ou polyols polyuréthanniques, des di-et/ou polyols polycarbonates, des di- et/ou polyols polyacrylates, des polyesters di- et/ou polyols et des polyéthers di- et/ou polyols.

5. Procédé selon la revendication 4, **caractérisé en ce que** le di- et/ou polyol mis en oeuvre est un di-et/ou polyol polyuréthannique, un di- et/ou polyol polycarbonate et un polyéther di- et/ou polyol.

6. Procédé selon l'une quelconque des revendications 1 à 5, **caractérisé en ce que** la résine aminoplaste hydrophobe est une résine mélaminique hydrophobe.

7. Procédé selon la revendication 6, **caractérisé en ce que** la résine mélaminique hydrophobe est préparée par éthérification d'un produit de condensation de mélamine/formaldéhyde avec des alcools en C3 à C12.

8. Procédé selon l'une quelconque des revendications 1 à 7, **caractérisé en ce que** la dispersion aqueuse multicomposant contient au moins un autre composant de réticulation en dispersion aqueuse.

9. Procédé selon la revendication 8, **caractérisé en ce que** l'autre composant de réticulation est une trisalcoxycarbonylaminotriazine en dispersion aqueuse.

10. Procédé selon l'une quelconque des revendications 1 à 9, **caractérisé en ce que** le liant contenant des groupes hydroxyle du composant A) est choisi dans le groupe des polyacrylates, polyuréthannes, polyesters, polyéthers, résines alkydes et/ou dérivés cellulosiques contenant des groupes hydroxyle.

11. Procédé selon la revendication 10, **caractérisé en ce que** le liant contenant des groupes hydroxyle du composant A) est un polyacrylate contenant des groupes hydroxyle.

12. Substrat revêtu d'un revêtement multicomposant, où le revêtement est appliqué sur la surface du substrat en ce que
(1): une laque de base aqueuse LB est appliquée sur la surface du substrat,
(2): la laque de base A appliquée à l'étape (1) est brièvement laissée à sécher pour former à partir d'elle un film de polymère,
(3): une laque de finition aqueuse transparente LF est ensuite appliquée sur la couche de laque de base obtenue selon l'étape (2) et enfin
(4): la couche de laque de base et la couche de laque de finition sont cuites ensemble,
**caractérisé en ce que** la laque de finition LF est une laque aqueuse selon l'une quelconque des revendications 1 à 11.
